# EUROPEAN PATENT SPECIFICATION

(11) **EP 4 184 869 B1**
(45) Date of publication and mention of the grant of the patent: **25.11.2026**
(21) Application number: 22200244.6
(22) Date of filing: 07.10.2022
(51) Int. Cl.: H04L 9/40, H04L 47/10, H04L 47/17, H04L 47/50

(54) **NETWORK SYSTEMS AND METHODS FOR WORD BASED ARBITRATION OF DATA**
NETZWERKSYSTEME UND VERFAHREN ZUR WORTBASIERTEN ARBITRIERUNG VON DATEN
SYSTÈMES DE RÉSEAU ET PROCÉDÉS D'ARBITRAGE DE DONNÉES BASÉ SUR DES MOTS

(30) Priority: 19.11.2021 US 202117531356
(43) Date of publication of application: 24.05.2023
(73) Proprietor: Altera Corporation, San Jose, CA 95134 (US)
(72) Inventor: SOO, Choon Yip, 11900 Bayan Lepas (MY)
(74) Representative: Viering, Jentschura & Partner mbB Patent- und Rechtsanwälte

(56) References cited:
- US-A1- 2005 105 563
- US-A1- 2012 230 390
- US-B1- 8 838 999
- GOVINDAN VIDYA ET AL: "ProTro: A Probabilistic Counter Based Hardware Trojan Attack on FPGA Based MACSec Enabled Ethernet Switch", 22 November 2019, 16TH EUROPEAN CONFERENCE - COMPUTER VISION - ECCV 2020, PAGE(S) 159 - 175, XP047528242

## Description

### FIELD OF THE DISCLOSURE

The present disclosure relates to electronic circuits, and more particularly, to network systems and method for word based arbitration of data.

### BACKGROUND

MACSEC is a network security standard that provides secure communications for data traffic on Ethernet links. The MACSEC standard specifies a set of protocols that meet the security requirements for protecting data traversing Ethernet local area networks (LANs) between computing devices. MACSEC defines a security infrastructure to provide data confidentiality, data integrity and data origin authentication by media access independent protocols and entities. MACSEC operates at the medium (or media) access control layer (MAC) within the data link layer of the Open Systems Interconnection model (i.e., the OSI model). MACSEC is also referred to as the Institute of Electrical and Electronics Engineers (IEEE) 802.1AE standard.

US 8,838,999 B1 discloses that in a cut-through packet stream encryption/ decryption system, packet blocks, i.e. segments of data less than or equal in size to a packet, are accumulated at different input FIFOs, a multiplexer, based on arbitration decision, forwards the packet blocks to a MACSEC based encryption processor, that supplies encrypted packet blocks to a demultiplexer, that writes the encrypted packet blocks in different output FIFOs for further sending to multiple IO ports. Similar decryption system is disclosed.

Govindan Vidya et al., "ProTro: A Probabilistic Counter Based Hardware Trojan Attack on FPGA Based MACSec Enabled Ethernet Switch*"* describes a network packet redirection attack on a MACSec enabled ethernet switch by means of a Hardware Trojan.

US2005105563 A1 discloses that several video sources are first multiplexed in subsets using multiple parallel statistical multiplexing units, and the outputs of all the statistical multiplexing units are all multiplexed together in a common multiplexing unit. Video sources are separately encoded and buffered before common multiplexing. Based on received allocated bandwidth information, the bandwidth of each statistical multiplexing unit is increased or decreased in the same proportion, and the multiplexing unit initially supplies a predefined reference bit rate as the allocated bandwidth information to each of the statistical multiplexing units.

### Summary of the invention

Independent claim 1 defines an apparatus, an electronic network system, according to the invention. Independent claim 7 defines a corresponding method for transmitting data in an electronic network system according to the invention. Preferred embodiments are defined in the dependent claims.

### BRIEF DESCRIPTION OF THE DRAWINGS

Figure 1 illustrates an example of an electronic network system that supports word based arbitration and dynamic reconfiguration during runtime to implement a change in the bit rate of bits being transmitted between network controllers.
Figure 2A is a diagram that illustrates details of an example of the receiver port select circuit of FIG. 1.
Figure 2B is a diagram that illustrates examples of packets of words stored in four of the buffer circuits in the receiver port select circuit of FIG. 2A.
Figure 2C is a timing diagram that illustrates examples of words from each of the 4 packets shown in FIG. 2B that have been interleaved in the output signal of the multiplexer circuit in the receiver port select circuit of FIG. 1.
Figure 3 is a diagram that illustrates details of an example of the receiver port deselect circuit of FIG. 1.
Figure 4 is a diagram that illustrates details of an example of the transmitter port select circuit of FIG. 1.
Figure 5 is a diagram that illustrates details of an example of the transmitter port deselect circuit of FIG. 1.
Figure 6 is a diagram of an illustrative example of a programmable logic integrated circuit.

### DETAILED DESCRIPTION

Network devices that support the MACSEC security standard for Ethernet local area networks (LANs) typically have fixed port configurations that cannot be reconfigured during runtime. In order to increase the bit rate of the data transmitted through a MACSEC network device, the hardware and/or software of the device typically needs to be upgraded. For example, in order to increase the bit rate of a MACSEC network device from 10 Gigabit (G)/40G (10G/40G) Ethernet to 25G/50G/100G Ethernet, the hardware and software of the MACSEC network device typically needs to be upgraded to support a different configuration for the increased bit rate. In addition, MACSEC network devices typically perform arbitration of data on a per packet basis.

According to some examples disclosed herein, a computer network device includes network controllers having transmitter and receiver circuits, a security controller, and transmitter and receiver port select and deselect circuits. The receiver port select circuit interleaves words from different packets of bits that are received at different ports from a set of the transmitter circuits. The interleaved words are provided to the security controller. The receiver port deselect circuit deinterleaves the interleaved words received from the security controller to regenerate the packets of bits at each of the ports. The packets of bits are then provided to a set of the receiver circuits. The transmitter port select circuit interleaves words from different packets of bits that are received at different ports from another set of the transmitter circuits. The interleaved words are provided to the security controller. The transmitter port deselect circuit deinterleaves the interleaved words received from the security controller to regenerate the packets of bits at each of the ports. The packets of bits are then provided to another set of the receiver circuits. The transmitter and receiver port select and deselect circuits support dynamic changes in the bit rate of the packets being transmitted by the network controllers during runtime, as described in more detail below.

Throughout the specification, and in the claims, the term "connected" means a direct electrical connection between the circuits that are connected, without any intermediary devices. The term "coupled" means either a direct electrical connection between circuits or an indirect electrical connection through one or more passive or active intermediary devices that allows the transfer of information between circuits. The term "circuit" may mean one or more passive and/or active electrical components that are arranged to cooperate with one another to provide a desired function.

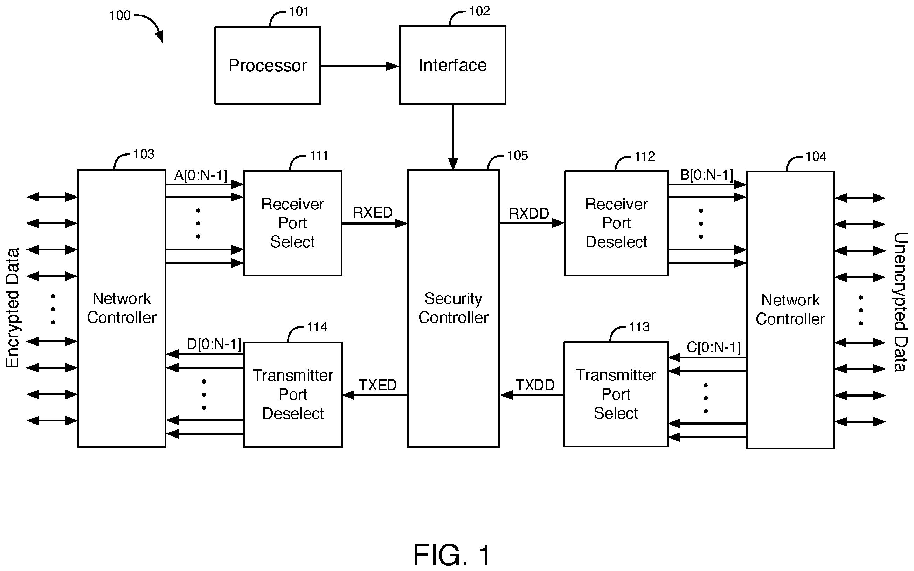

Figure 1 illustrates an example of an electronic network system 100 that supports word based arbitration and dynamic reconfiguration during runtime to implement a change in the bit rate of bits being transmitted between network controllers. The network system of Figure (FIG.) 1 includes a processor circuit 101, an interface circuit 102, network controller circuits 103-104, security controller circuit 105, receiver port select circuit 111, receiver port deselect circuit 112, transmitter port select circuit 113, and transmitter port deselect circuit 114. Controller circuits 103-105 and port select/deselect circuits 111-114 may be in multiple integrated circuits or in a single integrated circuit (IC), such as a microprocessor IC, a programmable logic IC, or a graphics processing unit IC. Programmable logic ICs include any integrated circuits that can be programmed to perform desired functions, including programmable logic arrays (PLAs), programmable array logic (PAL), field programmable gate arrays (FPGAs), and programmable logic devices (PLDs). Processor circuit 101 may, for example, be in a separate IC.

The network system 100 of Figure (FIG.) 1 may, for example, couple together computing devices in an Ethernet local area network (LAN). Network controller circuit 103 may receive encrypted data from one or more computing devices (not shown) in the Ethernet LAN (e.g., through an Ethernet cable). Network controller circuit 103 includes transmitter and receiver circuits (e.g., transceivers) that transmit and receive data according to a networking communication standard, such as an Ethernet standard. Transmitter circuits in network controller circuit 103 provide an N number of signals A[0:N-1] that indicate the received encrypted data to receiver port select circuit 111. The encrypted data may include packets of bits. Each of the packets includes multiple words of bits. Each of these words may include several bits of information (i.e., digital bits). For example, each word may include 64, 128, 256, 512, or 1024 bits of information.

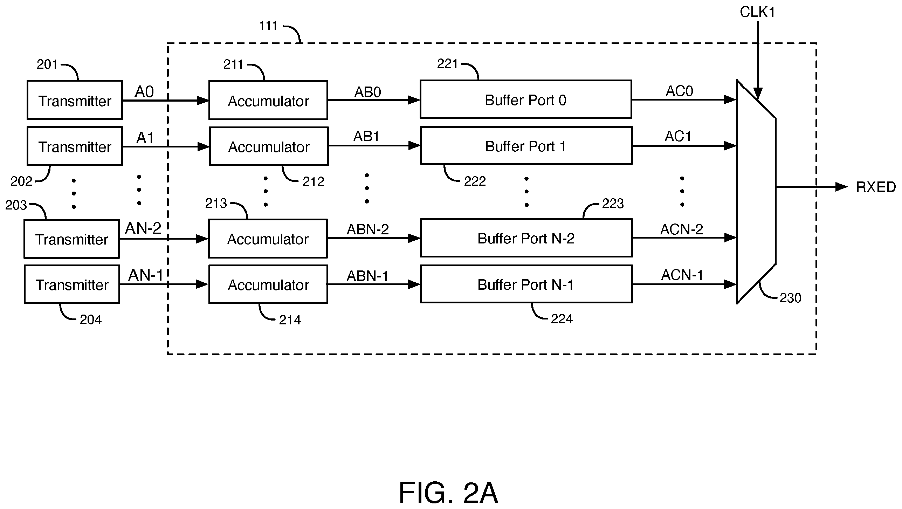

Each of the N number of signals A[0:N-1] is provided to a different port in receiver port select circuit 111 through conductors (e.g., wires in one or more conductive layers of an IC or package). N may be any integer greater than 1. Receiver port select circuit 111 performs word based arbitration from each of the ports. Instead of outputting the bits in an entire packet from one port together, receiver port select circuit 111 interleaves words in the packets at each of the ports to generate an interleaved data stream in its output signal RXED. Output signal RXED may be a serial signal or parallel signals. Receiver port select circuit 111 may cause the packets from each port to have the average latency regardless of the packet size. Receiver port select circuit 111 may also prevent small packets from being blocked by larger packets from other ports. Receiver port select circuit 111 is disclosed in more detail herein with respect to FIGS. 2A-2C.

The output signal RXED of receiver port select circuit 111 is provided to an input of security controller circuit 105 through one or more conductors. Security controller circuit 105 may be, for example, a controller that supports the MACSEC security standard for Ethernet local area networks (LANs). Security controller circuit 105 may, for example, decrypt the data indicated by signal RXED using a decryption key to generate decrypted data in output signal RXDD. Alternatively, security controller circuit 105 may decrypt data received from processor circuit 101 through interface 102 using a decryption key to generate decrypted data in output signal RXDD. Output signal RXDD is provided through one or more conductors to receiver port deselect circuit 112.

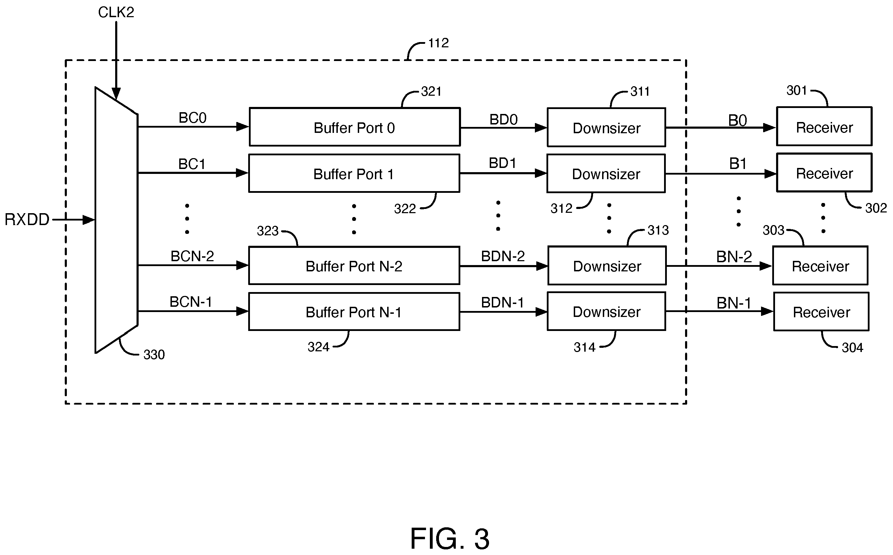

Receiver port deselect circuit 112 separates the unencrypted words (e.g., the decrypted words) received in signal RXDD to regenerate each of the individual packets by providing each of the words to the corresponding one of the ports that the word was received from in signals A[0:N-1]. Receiver port deselect circuit 112 is disclosed herein in more detail with respect to FIG. 3. Receiver port deselect circuit 112 outputs an N number of signals B[0:N-1]. Each of the output signals B[0:N-1] includes packets of bits from only one of the ports. The packets include unencrypted data from receiver port select circuit 111 (or from processor circuit 101).

Network controller circuit 104 includes transmitter and receiver circuits (e.g., transceivers) that transmit and receive data according to a networking communication standard, such as an Ethernet standard. The output signals B[0:N-1] of receiver port deselect circuit 112 are provided to receiver circuits in network controller circuit 104 through conductors. Network controller circuit 104 provides the packets of unencrypted data indicated by signals B[0:N-1] to one or more computing devices (not shown) in the Ethernet LAN (e.g., through an Ethernet cable).

Network controller circuit 104 may receive unencrypted data from one or more computing devices (not shown) in the Ethernet LAN (e.g., through an Ethernet cable). Transmitter circuits in network controller circuit 104 transmit an N number of signals C[0:N-1] that indicate the received unencrypted data to transmitter port select circuit 113 through conductors. The unencrypted data indicated by signals C[0:N-1] includes packets of bits. Each of the packets includes multiple words. Each of these words may include several bits of information. For example, each word may include 64, 128, 256, 512, or 1024 bits of information.

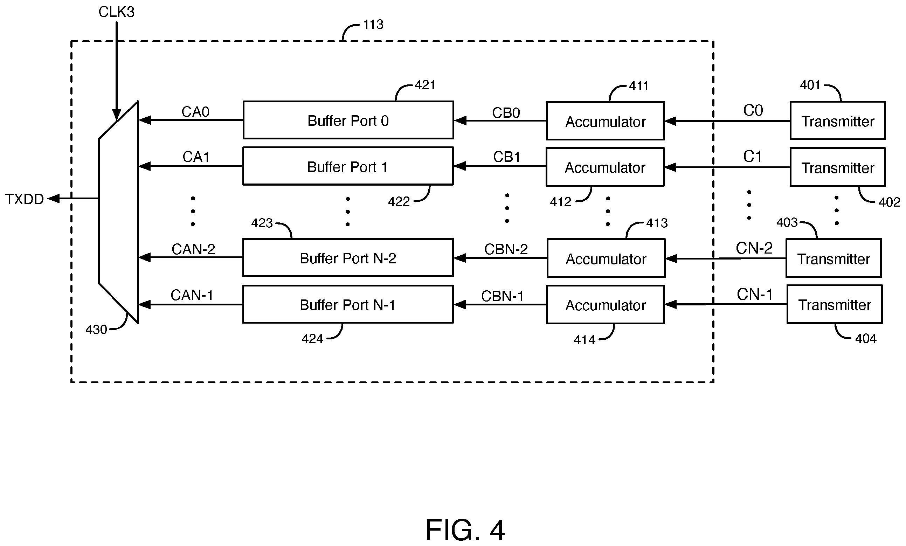

Each of the N number of signals C[0:N-1] is provided to a different port in transmitter port select circuit 113. Transmitter port select circuit 113 performs word based arbitration from each of the ports. Transmitter port select circuit 113 interleaves words from the packets at each of the ports to generate an interleaved data stream in its output signal TXDD. Output signal TXDD may be a serial signal or parallel signals. Transmitter port select circuit 113 may cause packets from each port to have the average latency regardless of the packet size. Transmitter port select circuit 113 may also prevent small packets from being blocked by larger packets from other ports. Transmitter port select circuit 113 is disclosed herein in more detail with respect to FIG. 4.

The output signal TXDD of transmitter port select circuit 113 is provided to an input of security controller circuit 105 through one or more conductors. Security controller circuit 105 may, for example, encrypt the words of data indicated by signal TXDD using an encryption key to generate encrypted words of data in output signal TXED. Alternatively, security controller circuit 105 may encrypt data received from processor circuit 101 through interface 102 using an encryption key to generate encrypted data in output signal TXED. Output signal TXED is provided to an input of transmitter port deselect circuit 114 through one or more conductors as serial or parallel data.

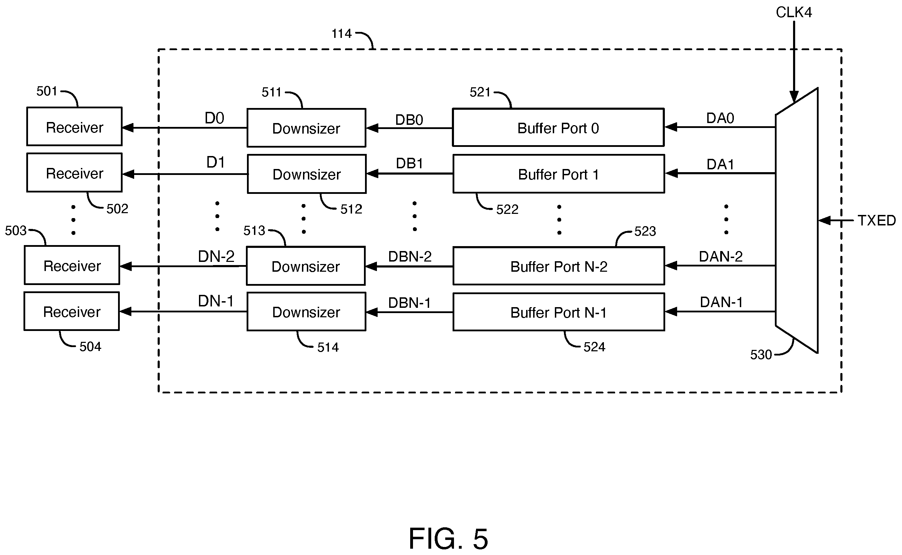

Transmitter port deselect circuit 114 separates the encrypted interleaved data words received in signal TXED to regenerate each of the individual packets by providing each of the words to the corresponding one of the ports that the word was received from in signals C[0:N-1]. Transmitter port deselect circuit 114 is disclosed herein in more detail with respect to FIG. 5. Transmitter port deselect circuit 114 outputs an N number of signals D[0:N-1]. Each of the N output signals D[0:N-1] includes packets from only one of the ports. The packets are from transmitter port select circuit 113 or from processor circuit 101. The output signals D[0:N-1] of transmitter port deselect circuit 114 are provided through conductors to receiver circuits in network controller circuit 103. Network controller circuit 103 provides the encrypted packets of data indicated by signals D[0:N-1] to one or more computing devices (not shown) in the Ethernet LAN (e.g., through an Ethernet cable).

Figure 2A is a diagram that illustrates details of an example of the receiver port select circuit 111 of FIG. 1. FIG. 2A illustrates 4 accumulator circuits 211-214, 4 buffer circuits 221-224 at 4 ports, and a multiplexer circuit 230 in receiver port select circuit 111. FIG. 2A also illustrates 4 transmitter circuits 201-204 that are in network controller circuit 103. It should be understood that receiver port select circuit 111 may include any number N of accumulator circuits and any number N of buffer circuits corresponding to N ports and that network controller circuit 103 may include a corresponding number N of transmitter circuits. Transmitter circuits 201-204 may, for example, be part of transceiver circuits in channel circuits in network controller circuit 103.

Transmitter circuits 201-204 transmit signals A0, A1, AN-2, and AN-1 (i.e., signals A[0:N-1]) to inputs of accumulator circuits 211-214, respectively. Each of the accumulator circuits 211-214 may include, for example, a first-in-first-out (FIFO) buffer circuit. Accumulator circuits 211-214 store and accumulate bits received in signals A0, A1, AN-2, and AN-1 into words (e.g., using FIFO buffer circuits that are responsive to a clock signal) and then provide the accumulated words to buffer circuits 221-224 as signals AB0, AB1, ABN-2, and ABN-1, respectively.

The buffer circuits 221, 222, 223, and 224 correspond to ports 0, 1, N-2, and N-1, respectively. Each of the buffer circuits 221-224 may include, for example, a FIFO buffer circuit that is responsive to a clock signal. The buffer circuits 221-224 store the words received in signals AB0, AB1, ABN-2, and ABN-1, respectively, in response to a clock signal. Each of the buffer circuits 221-224 may, for example, store an entire packet of words received in a respective one of signals AB0, AB1, ABN-2, and ABN-1. Buffer circuits 221, 222, 223, and 224 provide the words to four data inputs of multiplexer circuit 230 as signals AC0, AC1, ACN-2, and ACN-1, respectively. A clock signal CLK1 is provided to a select input of multiplexer circuit 230. Multiplexer circuit 230 provides words of bits received from buffer circuits 221-224 to its output signal RXED in response to clock signal CLK1. Multiplexer circuit 230 interleaves the words received in signals AC0, AC1, ... ACN-2, ACN-1 from buffer circuits 221-224 to generate a data stream in its output signal RXED that has interleaved words of bits from ports 0, 1, ... N-2, N-1, respectively, provided in sequential order in response to clock signal CLK1.

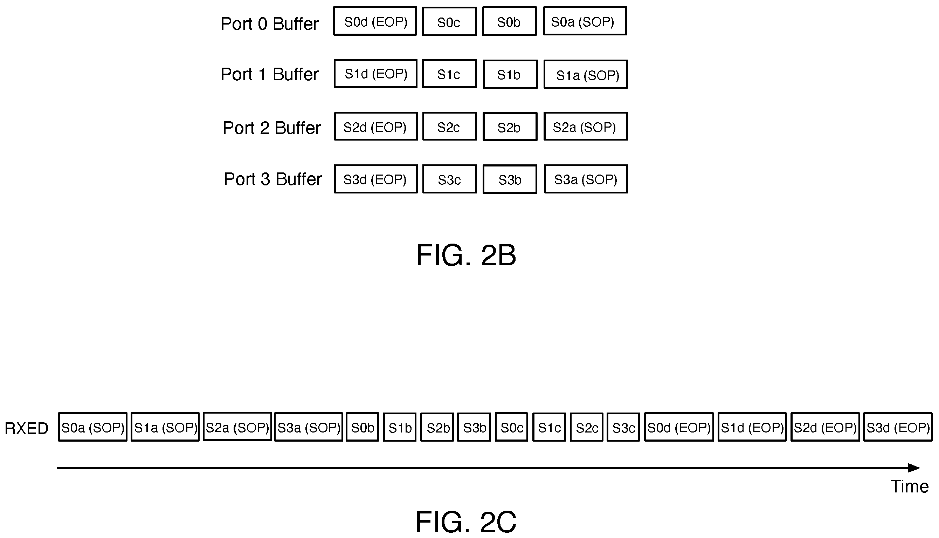

Figure 2B is a diagram that illustrates examples of packets of words stored in four of the buffer circuits in the receiver port select circuit 111 of FIG. 2A. In the example of FIG. 2B, the buffer circuit 221 for port 0 stores 4 words S0a, S0b, S0c, and S0d received from signal AB0. Words S0a, S0b, S0c, and S0d form a first packet in this example. The buffer circuit 222 for port 1 stores 4 words S1a, S1b, S1c, and S1d received from signal AB1. Words S1a, S1b, S1c, and S1d form a second packet in this example. The buffer circuit for port 2 (e.g., buffer circuit 223) stores 4 words S2a, S2b, S2c, and S2d received from signal AB2 (e.g., signal ABN-2). Words S2a, S2b, S2c, and S2d for a third packet in this example. The buffer circuit for port 3 (e.g., buffer circuit 224) stores 4 words S3a, S3b, S3c, and S3d received from signal AB3 (e.g., signal ABN-1). Words S3a, S3b, S3c, and S3d form a fourth packet in this example. Words S0a, S1a, S2a, and S3a are start of packet (SOP) words for the corresponding 4 packets. Words S0d, S1d, S2d, and S3d are end of packet (EOP) words for the corresponding 4 packets.

Figure 2C is a timing diagram that illustrates examples of words from each of the 4 packets shown in FIG. 2B that have been interleaved in the output signal RXED of multiplexer circuit 230. Multiplexer circuit 230 may output a word from a packet at a different one of the ports in each clock cycle of CLK1, in each fraction of a clock cycle of CLK1, or in multiple clock cycles of CLK1. Multiplexer circuit 230 causes words from ports 0, 1, 2, and 3 to be interleaved and provided sequentially in output signal RXED in the order in which the words are received, starting with the SOP words and ending with the EOP words, as shown in FIG. 2C. Thus, in the example of FIG. 2C, words from the packets are provided at the output of multiplexer circuit 230 in signal RXED in the order of S0a, S1a, S2a, S3a, S0b, S1b, S2b, S3b, S0c, S1c, S2c, S3c, S0d, S1d, S2d, and S3d.

Figure 3 is a diagram that illustrates details of an example of the receiver port deselect circuit 112 of FIG. 1. FIG. 3 illustrates 4 downsizer circuits 311-314, 4 buffer circuits 321-324, and a demultiplexer circuit 330 in receiver port deselect circuit 112. FIG. 3 also illustrates 4 receiver circuits 301-304 that are in network controller circuit 104. It should be understood that receiver port deselect circuit 112 may include any number N of downsizer circuits and any number N of buffer circuits corresponding to N ports and that network controller circuit 104 may include a corresponding number N of receiver circuits. Receiver circuits 301-304 may, for example, be part of transceiver circuits in channel circuits in network controller circuit 104.

Data signal RXDD is provided to a data input of demultiplexer circuit 330 from security controller 105. A clock signal CLK2 is provided to a select input of demultiplexer circuit 330. Demultiplexer circuit 330 provides each word of bits received in signal RXDD to one of the buffer circuits 321-324 as one of signals BC0, BC1, BCN-2, and BCN-1, respectively, in response to clock signal CLK2. Demultiplexer circuit 330 separates (i.e., deinterleaves) the interleaved words received in signal RXDD to provide an N number of signals BC0, BC1, ... BCN-2, BCN-1 at the N ports 0, 1, ... N-2, N-1 corresponding to buffer circuits 321-324, respectively, in response to clock signal CLK2. Demultiplexer circuit 330 provides each of the words received in signal RXDD to the same port in buffer circuits 321-324 that the word was received in the corresponding one of buffer circuits 221-224. Using the examples of FIGS. 2B-2C, demultiplexer circuit 330 provides words S0a, S0b, S0c, and S0d to buffer circuit 321. Demultiplexer circuit 330 provides words S1a, S1b, S1c, and S1d to buffer circuit 322. Demultiplexer circuit 330 provides words S2a, S2b, S2c, and S2d to buffer circuit 323. Demultiplexer circuit 330 provides words S3a, S3b, S3c, and S3d to buffer circuit 324.

The words received in signals BC0, BC1, BCN-2, and BCN-1 are stored in buffer circuits 321, 322, 323, and 324, respectively, in response to a clock signal. The buffer circuits 321, 322, 323, and 324 correspond to ports 0, 1, N-2, and N-1, respectively. Each of the buffer circuits 321-324 may, for example, include a FIFO circuit that outputs each word received from demultiplexer circuit 330 in a first-in-first-out order in response to a clock signal. Each of the buffer circuits 321-324 may, for example, store an entire packet of words received in a respective one of signals BC0, BC1, BCN-2, and BCN-1.

Buffer circuits 321-324 output the words received from demultiplexer circuit 330 in output signals BD0, BD1, ... BDN-2, BDN-1, respectively. Downsizer circuits 311-314 include buffer circuits that store the words received from buffer circuits 321-324 in signals BD0, BD1, ... BDN-2, BDN-1, respectively. Downsizer circuits 311-314 may, for example, separate bits in each of the words received in signals BD0, BD1, ... BDN-2, BDN-1 to generate smaller groups of bits (e.g., bytes) in output signals B0, B1, ... BN-2, BN-1, respectively, (i.e., signals B[0:N-1]). Signals B0, B1, ... BN-2, BN-1 are provided to inputs of receiver circuits 301-304, respectively, in network controller circuit 104. Network controller circuit 104 may provide the unencrypted data indicated by signals B0, B1, ... BN-2, BN-1 to other computing devices in the LAN.

Figure 4 is a diagram that illustrates details of an example of the transmitter port select circuit 113 of FIG. 1. FIG. 4 illustrates 4 accumulator circuits 411-414, 4 buffer circuits 421-424, and a multiplexer circuit 430 in transmitter port select circuit 113. FIG. 4 also illustrates 4 transmitter circuits 401-404 that are in network controller circuit 104. It should be understood that transmitter port select circuit 113 may include any number N of accumulator circuits and any number N of buffer circuits corresponding to N ports and that network controller circuit 104 may include a corresponding number N of transmitter circuits. Transmitter circuits 401-404 may, for example, be part of transceiver circuits in channel circuits in network controller circuit 104.

Transmitter circuits 401-404 transmit signals C0, C1, CN-2, and CN-1 (i.e., signals C[0:N-1]) to inputs of accumulator circuits 411-414, respectively. Each of the accumulator circuits 411-414 may include, for example, a FIFO buffer circuit. Accumulator circuits 411-414 store and accumulate bits received in signals C0, C1, CN-2, and CN-1 into words (e.g., using FIFO buffer circuits responsive to a clock signal) and then provide the accumulated words to buffer circuits 421-424 as signals CB0, CB1, CBN-2, and CBN-1, respectively.

The buffer circuits 421, 422, 423, and 424 correspond to ports 0, 1, N-2, and N-1, respectively. Each of the buffer circuits 421-424 may include, for example, a FIFO buffer circuit. The buffer circuits 421-424 store words received in signals CB0, CB1, CBN-2, and CBN-1 from accumulator circuits 411-414, respectively. Each of the buffer circuits 421-424 may, for example, store an entire packet of words received in a respective one of signals CB0, CB1, CBN-2, and CBN-1. Buffer circuits 421, 422, 423, and 424 provide the words in each of the packets to four data inputs of multiplexer circuit 430 as signals CA0, CA1, CAN-2, and CAN-1, respectively. A clock signal CLK3 is provided to a select input of multiplexer circuit 430. Multiplexer circuit 430 provides the words received from buffer circuits 421-424 to its output signal TXDD in response to clock signal CLK3. Multiplexer circuit 430 interleaves the words received in signals CA0, CA1, CAN-2, and CAN-1 from buffer circuits 421-424 to generate a data stream in its output signal TXDD that has interleaved words of bits from the ports 0, 1, ... N-2, N-1, respectively, in sequential order in response to clock signal CLK3, as disclosed herein, for example, with respect to FIGS. 2B-2C.

Figure 5 is a diagram that illustrates details of an example of the transmitter port deselect circuit 114 of FIG. 1. FIG. 5 illustrates 4 downsizer circuits 511-514, 4 buffer circuits 521-524, and a demultiplexer circuit 530 in transmitter port deselect circuit 114. FIG. 5 also illustrates 4 receiver circuits 501-504 that are in network controller circuit 103. It should be understood that transmitter port deselect circuit 114 may include any number N of downsizer circuits and any number N of buffer circuits corresponding to N ports and that network controller circuit 103 may include a corresponding number N of receiver circuits. Receiver circuits 501-504 may, for example, be part of transceiver circuits in channel circuits in network controller circuit 103.

Data signal TXED is provided to a data input of demultiplexer circuit 530 from security controller 105. A clock signal CLK4 is provided to a select input of demultiplexer circuit 530. Demultiplexer circuit 530 provides each word of bits received in signal TXED to one of buffer circuits 521-524 as one of signals DA0, DA1, DAN-2, and DAN-1, respectively, in response to clock signal CLK4. Demultiplexer circuit 530 separates (i.e., deinterleaves) the interleaved words received in signal TXED to provide an N number of signals DA0, DA1, ... DAN-2, DAN-1 to the N ports 0, 1, ... N-2, N-1 corresponding to buffer circuits 521-524, respectively, in response to clock signal CLK4. Demultiplexer circuit 530 provides each of the words received in signal TXED to the same port in buffer circuits 521-524 that the word was received in the corresponding one of buffer circuits 421-424. Using the examples of FIGS. 2B-2C, demultiplexer circuit 530 provides words S0a, S0b, S0c, and S0d to buffer circuit 521. Demultiplexer circuit 530 provides words S1a, S1b, S1c, and S1d to buffer circuit 522. Demultiplexer circuit 530 provides words S2a, S2b, S2c, and S2d to buffer circuit 523. Demultiplexer circuit 530 provides words S3a, S3b, S3c, and S3d to buffer circuit 524.

The words received in signals DA0, DA1, DAN-2, and DAN-1 are stored in buffer circuits 521, 522, 523, and 524, respectively. The buffer circuits 521, 522, 523, and 524 correspond to ports 0, 1, N-2, and N-1, respectively. Each of the buffer circuits 521-524 may, for example, include a FIFO circuit that outputs each word received from demultiplexer circuit 530 in a first-in-first-out order in response to a clock signal. Each of the buffer circuits 521-524 may, for example, store an entire packet of words received in a respective one of signals DA0, DA1, DAN-2, and DAN-1.

Buffer circuits 521-524 provide the words received from demultiplexer circuit 530 to downsizer circuits 511-514 in N output signals DB0, DB1, ... DBN-2, DBN-1, respectively. Downsizer circuits 511-514 include buffer circuits that store the words received from buffer circuits 521-524 in signals DB0, DB1, ... DBN-2, DBN-1, respectively. Downsizer circuits 511-514 may, for example, separate bits in each of the words received in signals DB0, DB1, ... DBN-2, DBN-1 to generate smaller groups of bits (e.g., bytes) in output signals D0, D1, ... DN-2, DN-1, respectively, (i.e., signals D[0:N-1]. Signals D0, D1, ... DN-2, DN-1 are provided to inputs of receiver circuits 501-504, respectively, in network controller circuit 103. Network controller circuit 103 may provide the encrypted data indicated by signals D0, D1, ... DN-2, DN-1 to other computing devices in the LAN.

According to some examples of the network system 100 of FIG. 1, channel circuits in the network controller circuits 103-104 can be dynamically reconfigured during runtime to cause a change in the bit rate of bits being transmitted and received by the network controllers 103-104. The transmitter and receiver port select and deselect circuits 111-114 can support the transmission of bits both before and after dynamic reconfiguration. According to a specific example that is not intended to be limiting, Table 1 below shows examples of the bit rates of bits in gigabits per second (Gbps) provided through network system 100 of FIG. 1 both before and after the bit rate has been changed using dynamic reconfiguration (DR).

**Table 1**

| Channel | Transmitter/Receiver Bit Rate | | Bit Width |
|---|---|---|---|
| | Before DR | After DR | |
| 1 | 10 Gbps | 25 Gbps | 128 |
| 2 | 10 Gbps | 25 Gbps | 128 |
| 10 | 10 Gbps | 25 Gbps | 128 |
| 11 | 10 Gbps | 25 Gbps | 128 |

In the example of Table 1, four channel circuits 1, 2, 10 and 11 in each of network controller circuits 103-104 initially operate at 10 Gbps to transmit and receive bits using the transmitter/receiver port select/deselect circuits 111-114 and security controller circuit 105. Receiver port select and deselect circuits 111-112 are configured to arbitrate bits received from transmitter circuits in channel circuits 1 and 2 in network controller 103, with a 128 bit width on each port. Transmitter port select and deselect circuits 113-114 are configured to arbitrate bits received from transmitter circuits in channel circuits 10 and 11 in network controller 104, with a 128 bit width on each port.

Prior to dynamically reconfiguring network system 100, a user stops the flow of bits into transmitter/receiver port select/deselect circuits 111-114 and security controller circuit 105. Then, when there are no more bits to be processed by these circuits, the dynamic reconfiguration process is initiated on all 4 channel circuits 1, 2, 10, and 11 in network controllers 103-104 from 10 Gbps to 25 Gbps. In each of the port select/deselect circuits 111-114, the buffer circuits for the ports may be used to interleave/deinterleave the words of bits as described above both before and after dynamic reconfiguration from 10 Gbps to 25 Gbps. During the dynamic reconfiguration process, a user can, for example, reprogram network system 100 following an encryption rekeying process or reuse the existing security information. After dynamic reconfiguration, the transmission of bits through network system 100 can be resumed.

According to another specific example that is not intended to be limiting, Table 2 below shows examples of the bit rates of bits provided through network system 100 both before and after the bit rate has been changed by dynamically reconfiguring network controller circuits 103-104. In the example of Table 2, 8 channel circuits in each of the network controller circuits 103-104 are used to transmit and receive data prior to dynamic reconfiguration, and 2 channel circuits in each of the network controller circuits 103-104 are used to transmit and receive data after dynamic reconfiguration (DR).

**Table 2**

| Channel | Transmitter/Receiver Bit Rate | | Bit Width |
|---|---|---|---|
| | Before DR | After DR | |
| 0 | 25 Gbps | Unused | 256 |
| 1 | 25 Gbps | | 256 |
| 2 | 25 Gbps | | 256 |
| 3 | 25 Gbps | | 256 |
| 4 | Unused | 100 Gbps | 256 |
| 10 | 25 Gbps | Unused | 256 |
| 11 | 25 Gbps | | 256 |
| 12 | 25 Gbps | | 256 |
| 13 | 25 Gbps | | 256 |
| 14 | Unused | 100 Gbps | 256 |

In the example of Table 2, 8 channel circuits 0, 1, 2, 3, 10, 11, 12, and 13 in each of network controller circuits 103-104 initially operate at 25 Gbps to transmit and receive bits using the transmitter/receiver port select/deselect circuits 111-114 and security controller circuit 105. Receiver port select and deselect circuits 111-112 are configured to arbitrate bits received from transmitter circuits in channel circuits 0, 1, 2, and 3 in network controller 103, with a 256 bit width on each port. Transmitter port select and deselect circuits 113-114 are configured to arbitrate bits received from transmitter circuits in channel circuits 10, 11, 12, and 13 in network controller 104, with a 256 bit width on each port.

Prior to dynamically reconfiguring network system 100, a user stops the flow of bits into transmitter/receiver port select/deselect circuits 111-114 and security controller circuit 105. Then, when there are no more bits to be processed by these circuits, the dynamic reconfiguration process is initiated on the channel circuits 0-4 and 10-14 in network controllers 103-104. During the dynamic reconfiguration process, channel circuits 0-3 and 10-13 in network controllers 103-104 are disabled from transmitting and receiving bits, and channel circuits 4 and 14 in network controllers 103-104 are enabled to transmit and receive bits. As shown in Table 2, before dynamic reconfiguration, channel circuits 4 and 14 are unused for transmitting and receiving bits. After dynamic reconfiguration, channel circuits 0-3 and 10-13 are unused for transmitting and receiving bits, and channel circuits 4 and 14 transmit and receive bits at a bit rate of 100 Gbps. In each of the port select/deselect circuits 111-114, the buffer circuits for the 4 ports may be used to interleave/deinterleave the words as described above before dynamic reconfiguration, and the buffer circuit for the 1 port may be used to interleave/deinterleave the words after dynamic reconfiguration. During dynamic reconfiguration, a user can, for example, reprogram network system 100 following an encryption rekeying process or reuse the existing security information. After dynamic reconfiguration, the transmission of bits through network system 100 can be resumed.

According to another example that is applicable to 5G (the 5^{th} generation mobile network), 10 channel circuits 0 - 9 in network controllers 103-104 and corresponding ports in port select/deselect circuits 111-114 may be used to transmit bits at 10 Gbps (for a total bit rate of 100 Gbps) for a network slice 0 to stream video content. Channel circuits 41 - 45 in network controller circuits 103-104 and corresponding ports in port select/deselect circuits 111-114 may be used to transmit bits at 10 Gbps (for a total bit rate of 50 Gbps) for a second network slice 1 to stream generic broadband data. Channel circuits 10 - 40 and 46 - 53 are unused in this example. If the streaming video content bandwidth exceeds the maximum bandwidth supported by network slice 0 in channel circuits 0 - 9, dynamic reconfiguration of network system 100 is performed to increase the bandwidth. The user can either perform dynamic reconfiguration on channel circuits 0 - 9 to increase the Ethernet bit rate from 10 Gbps to 25 Gbps or configure new channel circuits (e.g., ports 10 and up) and corresponding ports in circuits 111-114 to handle the additional bandwidth. Similarly, Ethernet port dynamic reconfiguration can be performed if the port bandwidth required is reduced to save power.

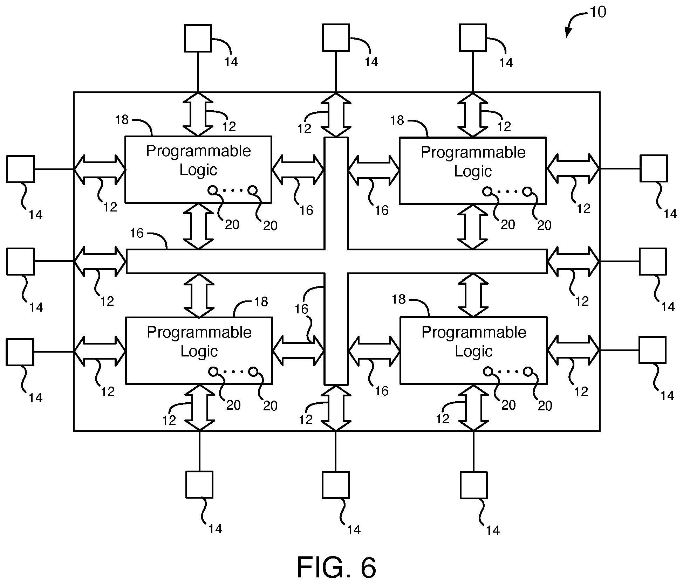

An illustrative programmable logic integrated circuit (IC) 10 that includes one or more network systems 100 is shown in Figure 6. As shown in FIG. 6, programmable logic integrated circuit 10 may have input-output circuitry 12 for driving signals off of IC 10 and for receiving signals from other devices via input-output pads 14. Interconnection resources 16 such as global, regional, and local vertical and horizontal conductive lines and buses may be used to route signals on IC 10. Interconnection resources 16 include fixed interconnects (conductive lines) and programmable interconnects (i.e., programmable connections between respective fixed interconnects). Programmable logic circuitry 18 may include combinational and sequential logic circuitry. The programmable logic circuitry 18 may be configured to perform custom logic functions according to a custom design for IC 10. A network system 100 may, for example, be implemented using the programmable logic circuity 18 and may use input-output circuitry 12 and input-output pads 14 to exchange data with external devices.

Programmable logic IC 10 contains memory elements 20 that can be loaded with configuration data (also called programming data) using pads 14 and input-output circuitry 12. Once loaded, the memory elements 20 may each provide a corresponding static control output signal that controls the state of an associated logic component in programmable logic circuitry 18. Typically, the memory element output signals are used to control the gates of metal-oxide-semiconductor (MOS) transistors. In the context of programmable integrated circuits, memory elements 20 store configuration data and are sometimes referred to as configuration random-access memory (CRAM) cells.

In general, software and data for performing any of the functions disclosed herein (e.g., by controller circuits 103-105) may be stored in non-transitory computer readable storage media. Non-transitory computer readable storage media is tangible computer readable storage media that stores data for a significant period of time, as opposed to media that only transmits propagating electrical signals (e.g., wires). The software code may sometimes be referred to as software, data, program instructions, instructions, or code. The non-transitory computer readable storage media may include computer memory chips, non-volatile memory such as non-volatile random-access memory (NVRAM), one or more hard drives (e.g., magnetic drives or solid state drives), one or more removable flash drives or other removable media, compact discs (CDs), digital versatile discs (DVDs), Blu-ray discs (BDs), other optical media, and floppy diskettes, tapes, or any other suitable memory or storage device(s).

The foregoing description of the examples has been presented for the purpose of illustration. The foregoing description is not intended to be exhaustive or to be limiting to the examples disclosed herein. In some instances, various features can be employed without a corresponding use of other features as set forth. Many modifications, substitutions, and variations are possible in light of the above teachings, without departing from the scope of the present embodiments.

## Claims

1. An electronic network system (100) comprising:
a first transmitter circuit (201, 401) that transmits first bits;
a second transmitter circuit (202, 402) that transmits second bits;
a port select circuit (111, 113) comprising a first buffer circuit (221, 421) that stores first words in a first packet of the first bits received from the first transmitter circuit (201, 401), a second buffer circuit (222, 422) that stores second words in a second packet of the second bits received from the second transmitter circuit (202, 402), and a multiplexer circuit (230, 430) that receives the first words from the first buffer circuit (221, 421) and the second words from the second buffer circuit (222, 422), wherein the multiplexer circuit (230, 430) interleaves the second words with the first words in a first output signal (RXED, TXDD) such that a first one of the second words in the second packet is provided in the first output signal (RXED, TXDD) after a first one of the first words in the first packet and before a second one of the first words in the first packet,
wherein the first transmitter circuit (201, 401) is dynamically reconfigured to change a transmission speed of the first bits from a first bit rate to a second bit rate that is different than the first bit rate, wherein the second transmitter circuit (202, 402) is dynamically reconfigured to change a transmission speed of the second bits from the first bit rate to the second bit rate, wherein the first buffer circuit (221, 421) stores the first words at each of the first bit rate and the second bit rate, wherein the second buffer circuit (222, 422) stores the second words at each of the first bit rate and the second bit rate, and wherein the multiplexer circuit (230, 430) interleaves the second words with the first words at each of the first bit rate and the second bit rate; and
a security controller circuit (105) that performs a security function on the first output signal (RXED, TXDD) to generate a second output signal (RXDD, TXED) indicating the first and the second words; and
a port deselect circuit (112, 114) comprising first and second port circuits (301, 501, 302, 502) and a demultiplexer circuit (330, 530) that receives the second output signal (RXED, TXDD), wherein the demultiplexer circuit (330, 530) provides each of the first words to the first port circuit (301, 501) and each of the second words to the second port circuit (302, 502).

2. The electronic network system (100) of claim 1 further comprising:
a third transmitter circuit (203, 403) that transmits third bits, wherein the port select circuit (111, 113) further comprises a third buffer circuit (223, 423) that stores third words in a third packet of the third bits received from the third transmitter circuit (203, 403), wherein the multiplexer circuit (230, 430) receives the third words from the third buffer circuit (223, 423), and wherein the multiplexer circuit (230, 430) interleaves the first, the second, and the third words in the first output signal (RXED, TXDD) such that a first one of the third words in the third packet is provided in the first output signal (RXED, TXDD) after the first ones of the first and the second words and before the second one of the first words and a second one of the second words in the second packet.

3. The electronic network system (100) of claim 2 further comprising:
a fourth transmitter circuit (204, 404) that transmits fourth bits, wherein the port select circuit (111, 113) further comprises a fourth buffer circuit (224, 424) that stores fourth words in a fourth packet of the fourth bits received from the fourth transmitter circuit (204, 404), wherein the multiplexer circuit (230, 430) receives the fourth words from the fourth buffer circuit (224, 424), and wherein the multiplexer circuit (230, 430) interleaves the first, the second, the third, and the fourth words in the first output signal (RXED, TXDD) in response to a clock signal (CLK1, CLK3) such that one of the fourth words is provided in the first output signal (RXED, TXDD) after the first ones of the first, the second, and the third words and before the second ones of the first and the second words and a second one of the third words in the third packet.

4. The electronic network system (100) of claim 2
wherein the port deselect circuit (112, 114) comprises a fourth buffer circuit (321, 521), a fifth buffer circuit (322, 522), a sixth buffer circuit (323, 523), and a demultiplexer circuit (330, 530) that receives the first, the second, and the third words, wherein the demultiplexer circuit (330, 530) provides each of the first words to the fourth buffer circuit (321, 521) to regenerate the first packet, each of the second words to the fifth buffer circuit (322, 522) to regenerate the second packet, and each of the third words to the sixth buffer circuit (323, 523) to regenerate the third packet.

5. The electronic network system (100) of claim 3
wherein the port deselect circuit (112, 114) comprises a fifth buffer circuit (321, 521), a sixth buffer circuit (322, 522), a seventh buffer circuit (323, 523), an eighth buffer circuit (324, 524), and a demultiplexer circuit (330, 530) that receives the first, the second, the third, and the fourth words, wherein the demultiplexer circuit (330, 530) provides each of the first words to the fifth buffer circuit (321, 521) to regenerate the first packet, each of the second words to the sixth buffer circuit (322, 522) to regenerate the second packet, each of the third words to the seventh buffer circuit (323, 523) to regenerate the third packet, and each of the fourth words to the eighth buffer circuit (324, 524) to regenerate the fourth packet.

6. The electronic network system (100) of any one of claims 1-5, wherein the port select circuit (111, 113) further comprises a first accumulator circuit (211, 411) that accumulates the first bits received from the first transmitter circuit (201, 401) into the first words and that provides the first words to the first buffer circuit (221, 421), and wherein the port select circuit (111, 113) further comprises a second accumulator circuit (212, 412) that accumulates the second bits received from the second transmitter circuit (202, 402) into the second words and that provides the second words to the second buffer circuit (222, 422).

7. A method for transmitting data in an electronic network system (100), the method comprising:
receiving first bits from a first transmitter circuit (201, 401);
receiving second bits from a second transmitter circuit (202, 402);
storing first words of the first bits from a first packet in a first buffer circuit (221, 421) in a port select circuit (111, 113);
storing second words of the second bits from a second packet in a second buffer circuit (222, 422) in the port select circuit (111, 113);
providing the first words from the first buffer circuit (221, 421) and the second words from the second buffer circuit (222, 422) to a multiplexer circuit (230, 430) in the port select circuit (111, 113);
interleaving the second words with the first words in an output signal (RXED, TXDD) using the multiplexer circuit (230, 430) such that a first one of the second words from the second packet is provided in the output signal (RXED, TXDD) after a first one of the first words from the first packet and before a second one of the first words from the first packet;
dynamically reconfiguring the first transmitter circuit (201, 401) to change a transmission speed of the first bits from a first bit rate to a second bit rate that is different than the first bit rate;
dynamically reconfiguring the second transmitter circuit (202, 402) to change a transmission speed of the second bits from the first bit rate to the second bit rate,
wherein storing the first words in the first buffer circuit (221, 421) comprises storing the first words at each of the first bit rate and the second bit rate in the first buffer circuit (221, 421), and wherein storing the second words in the second buffer circuit (222, 422) comprises storing the second words at each of the first bit rate and the second bit rate in the second buffer circuit (222, 422); and
performing a security function using a security controller circuit (105) on the output signal (RXED, TXDD) of the multiplexer circuit (230, 430) to generate an additional output signal (RXDD, TXED) indicating the first and the second words,
receiving at a demultiplexer circuit (330, 530) the additional output signal (RXED, TXDD), wherein the demultiplexer circuit (330, 530) provides each of the first words to a first port circuit (301, 501) and each of the second words to a second port circuit (302, 502).

8. The method of claim 7 further comprising:
receiving third bits from a third transmitter circuit (203, 403);
storing third words of the third bits from a third packet in a third buffer circuit (223, 423);
providing the third words from the third buffer circuit (223, 423) to the multiplexer circuit (230, 430); and
interleaving the first, the second, and the third words in the output signal (RXED, TXDD) using the multiplexer circuit (230, 430) such that at least one of the third words is provided in the output signal (RXED, TXDD) after the first ones of the first and the second words and before the second one of the first words and a second one of the second words in the second packet.

9. The method of claim 7 or 8 further comprising:
receiving the second words interleaved with the first words in an input signal (RXDD, TXED) that is derived from the output signal (RXED, TXDD) at a demultiplexer circuit (330, 530) in a port deselect circuit (112, 114);
providing each of the first words to a first port circuit (301, 501) in the port deselect circuit (112, 114) to regenerate the first packet; and
providing each of the second words to a second port circuit (302, 502) in the port deselect circuit (112, 114) to regenerate the second packet.

10. The method of any one of claims 7 to 9 further comprising:
accumulating the first bits received from the first transmitter circuit (201, 401) into the first words using a first accumulator circuit (211, 411) in the port select circuit (111, 113);
providing the first words to the first buffer circuit (221, 421);
accumulating the second bits received from the second transmitter circuit (202, 402) into the second words using a second accumulator circuit (212, 412) in the port select circuit (111, 113); and
providing the second words to the second buffer circuit (222, 422).

## Patentansprüche

1. Elektronisches Netzwerksystem (100), das Folgendes umfasst:
eine erste Senderschaltung (201, 401), die erste Bits überträgt;
eine zweite Senderschaltung (202, 402), die zweite Bits überträgt;
eine Portauswahlschaltung (111, 113), umfassend eine erste Pufferschaltung (221, 421), die erste Wörter in einem ersten Paket der ersten Bits speichert, die von der ersten Senderschaltung (201, 401) empfangen werden, eine zweite Pufferschaltung (222, 422), die zweite Wörter in einem zweiten Paket der zweiten Bits speichert, die von der zweiten Senderschaltung (202, 402) empfangen werden, und eine Multiplexerschaltung (230, 430), die die ersten Wörter von der ersten Pufferschaltung (221, 421) und die zweiten Wörter von der zweiten Pufferschaltung (222, 422) empfängt, wobei die Multiplexerschaltung (230, 430) die zweiten Wörter mit den ersten Wörtern in einem ersten Ausgangssignal (RXED, TXDD) verschachtelt, so dass ein erstes der zweiten Wörter in dem zweiten Paket in dem ersten Ausgangssignal (RXED, TXDD) nach einem ersten der ersten Wörter in dem ersten Paket und vor einem zweiten der ersten Wörter in dem ersten Paket bereitgestellt wird,
wobei die erste Senderschaltung (201, 401) dynamisch rekonfiguriert wird, um eine Übertragungsgeschwindigkeit der ersten Bits von einer ersten Bitrate zu einer zweiten Bitrate zu ändern, die sich von der ersten Bitrate unterscheidet, wobei die zweite Senderschaltung (202, 402) dynamisch rekonfiguriert wird, um eine Übertragungsgeschwindigkeit der zweiten Bits von der ersten Bitrate zu der zweiten Bitrate zu ändern, wobei die erste Pufferschaltung (221, 421) die ersten Wörter sowohl mit der ersten Bitrate als auch mit der zweiten Bitrate speichert, wobei die zweite Pufferschaltung (222, 422) die zweiten Wörter sowohl mit der ersten Bitrate als auch mit der zweiten Bitrate speichert und wobei die Multiplexerschaltung (230, 430) die zweiten Wörter mit den ersten Wörtern sowohl mit der ersten Bitrate als auch mit der zweiten Bitrate verschachtelt; und
eine Sicherheitssteuerungsschaltung (105), die eine Sicherheitsfunktion an dem ersten Ausgangssignal (RXED, TXDD) durchführt, um ein zweites Ausgangssignal (RXDD, TXED) zu erzeugen, das die ersten und die zweiten Wörter angibt; und
eine Portdeselektierschaltung (112, 114), die eine erste und eine zweite Portschaltung (301, 501, 302, 502) und eine Demultiplexerschaltung (330, 530) umfasst, die das zweite Ausgangssignal (RXED, TXDD) empfängt, wobei die Demultiplexerschaltung (330, 530) jedes der ersten Wörter an die erste Portschaltung (301, 501) und jedes der zweiten Wörter an die zweite Portschaltung (302, 502) bereitstellt.

2. Elektronisches Netzwerksystem (100) nach Anspruch 1, ferner umfassend:
eine dritte Senderschaltung (203, 403), die dritte Bits überträgt, wobei die Portauswahlschaltung (111, 113) ferner eine dritte Pufferschaltung (223, 423) umfasst, die dritte Wörter in einem dritten Paket der dritten Bits speichert, die von der dritten Senderschaltung (203, 403) empfangen werden, wobei die Multiplexerschaltung (230, 430) die dritten Wörter von der dritten Pufferschaltung (223, 423) empfängt, und wobei die zweite Multiplexerschaltung (230, 430) die ersten, die zweiten und die dritten Wörter in dem ersten Ausgangssignal (RXED, TXDD) verschachtelt, so dass ein erstes der dritten Wörter in dem dritten Paket in dem ersten Ausgangssignal (RXED, TXDD) nach den ersten der ersten und der zweiten Wörter und vor dem zweiten der ersten Wörter und einem zweiten der zweiten Wörter in dem zweiten Paket bereitgestellt wird.

3. Elektronisches Netzwerksystem (100) nach Anspruch 2, ferner umfassend:
eine vierte Senderschaltung (204, 404), die vierte Bits überträgt, wobei die Portauswahlschaltung (111, 113) ferner eine vierte Pufferschaltung (224, 424) umfasst, die vierte Wörter in einem vierten Paket der vierten Bits speichert, die von der vierten Senderschaltung (204, 404) empfangen werden, wobei die Multiplexerschaltung (230, 430) die vierten Wörter von der vierten Pufferschaltung (224, 424) empfängt, und wobei die zweite Multiplexerschaltung (230, 430) die ersten, die zweiten, die dritten und die vierten Wörter in dem ersten Ausgangssignal (RXED, TXDD) als Reaktion auf ein Taktsignal (CLK1, CLK3) verschachtelt, so dass eines der vierten Wörter in dem dritten Paket in dem ersten Ausgangssignal (RXED, TXDD) nach den ersten der ersten, der zweiten und der dritten Wörter und vor den zweiten der ersten und der zweiten Wörter und einem zweiten der dritten Wörter in dem dritten Paket bereitgestellt wird.

4. Elektronisches Netzwerksystem (100) nach Anspruch 2,
wobei die Portdeselektierschaltung (112, 114) eine vierte Pufferschaltung (321, 521), eine fünfte Pufferschaltung (322, 522), eine sechste Pufferschaltung (323, 523) und eine Demultiplexerschaltung (330, 530) umfasst, die die ersten, die zweiten und die dritten Wörter empfängt, wobei die Demultiplexerschaltung (330, 530) jedes der ersten Wörter an die vierte Pufferschaltung (321, 521) zum Regenerieren des ersten Pakets, jedes der zweiten Wörter an die fünfte Pufferschaltung (322, 522) zum Regenerieren des zweiten Pakets und jedes der dritten Wörter an die sechste Pufferschaltung (323, 523) zum Regenerieren des dritten Pakets bereitstellt.

5. Elektronisches Netzwerksystem (100) nach Anspruch 3,
wobei die Portdeselektierschaltung (112, 114) eine fünfte Pufferschaltung (321, 521), eine sechste Pufferschaltung (322, 522), eine siebte Pufferschaltung (323, 523), eine achte Pufferschaltung (324, 524) und eine Demultiplexerschaltung (330, 530) umfasst, die die ersten, die zweiten, die dritten und die vierten Wörter empfängt, wobei die Demultiplexerschaltung (330, 530) jedes der ersten Wörter an die fünfte Pufferschaltung (321, 521) zum Regenerieren des ersten Pakets, jedes der zweiten Wörter an die sechste Pufferschaltung (322, 522) zum Regenerieren des zweiten Pakets, jedes der dritten Wörter an die siebte Pufferschaltung (323, 523) zum Regenerieren des dritten Pakets und jedes der vierten Wörter an die achte Pufferschaltung (324, 524) zum Regenerieren des vierten Pakets bereitstellt.

6. Elektronisches Netzwerksystem (100) nach einem der Ansprüche 1-5, wobei die Portauswahlschaltung (111, 113) ferner eine erste Akkumulatorschaltung (211, 411) umfasst, die die von der ersten Senderschaltung (201, 401) empfangenen ersten Bits in die ersten Wörter akkumuliert und die ersten Wörter an die erste Pufferschaltung (221, 421) bereitstellt, und wobei die Portauswahlschaltung (111, 113) ferner eine zweite Akkumulatorschaltung (212, 412) umfasst, die die von der zweiten Senderschaltung (202, 402) empfangenen zweiten Bits in die zweiten Wörter akkumuliert und die zweiten Wörter an die zweite Pufferschaltung (222, 422) bereitstellt.

7. Verfahren zum Übertragen von Daten in einem elektronischen Netzwerksystem (100), wobei das Verfahren Folgendes umfasst:
Empfangen erster Bits von einer ersten Senderschaltung (201, 401);
Empfangen zweiter Bits von einer zweiten Senderschaltung (202, 402);
Speichern erster Wörter der ersten Bits von einem ersten Paket in einer ersten Pufferschaltung (221, 421) in einer Portauswahlschaltung (111, 113);
Speichern zweiter Wörter der zweiten Bits von einem zweiten Paket in einer zweiten Pufferschaltung (222, 422) in der Portauswahlschaltung (111, 113);
Bereitstellen der ersten Wörter von der ersten Pufferschaltung (221, 421) und der zweiten Wörter von der zweiten Pufferschaltung (222, 422) an eine Multiplexerschaltung (230, 430) in der Portauswahlschaltung (111, 113);
Verschachteln der zweiten Wörter mit den ersten Wörtern in einem Ausgangssignal (RXED, TXDD) unter Verwendung der Multiplexerschaltung (230, 430), so dass ein erstes der zweiten Wörter von dem zweiten Paket in dem Ausgangssignal (RXED, TXDD) nach einem ersten der ersten Wörter von dem ersten Paket und vor einem zweiten der ersten Wörter von dem ersten Paket bereitgestellt wird;
dynamisches Rekonfigurieren der ersten Senderschaltung (201, 401), um eine Übertragungsgeschwindigkeit der ersten Bits von einer ersten Bitrate zu einer zweiten Bitrate zu ändern, die sich von der ersten Bitrate unterscheidet;
dynamisches Rekonfigurieren der zweiten Senderschaltung (202, 402), um eine Übertragungsgeschwindigkeit der zweiten Bits von der ersten Bitrate zu der zweiten Bitrate zu ändern,
wobei das Speichern der ersten Wörter in der ersten Pufferschaltung (221, 421) das Speichern der ersten Wörter sowohl mit der ersten Bitrate als auch mit der zweiten Bitrate in der ersten Pufferschaltung (221, 421) umfasst und wobei das Speichern der zweiten Wörter in der zweiten Pufferschaltung (222, 422) das Speichern der zweiten Wörter sowohl mit der ersten Bitrate als auch mit der zweiten Bitrate in der zweiten Pufferschaltung (222, 422) umfasst; und
Durchführen einer Sicherheitsfunktion unter Verwendung einer Sicherheitssteuerungsschaltung (105) an dem Ausgangssignal (RXED, TXDD) der Multiplexerschaltung (230, 430), um ein zusätzliches Ausgangssignal (RXDD, TXED) zu erzeugen, das die ersten und die zweiten Wörter angibt, Empfangen an einer Demultiplexerschaltung (330, 530) des zusätzlichen Ausgangssignals (RXED, TXDD), wobei die Demultiplexerschaltung (330, 530) jedes der ersten Wörter an eine erste Portschaltung (301, 501) und jedes der zweiten Wörter an eine zweite Portschaltung (302, 502) bereitstellt.

8. Verfahren nach Anspruch 7, ferner umfassend:
Empfangen dritter Bits von einer dritten Senderschaltung (203, 403);
Speichern dritter Wörter der dritten Bits von einem dritten Paket in einer dritten Pufferschaltung (223, 423) ;
Bereitstellen der dritten Wörter von der dritten Pufferschaltung (223, 423) an die Multiplexerschaltung (230, 430); und
Verschachteln der ersten, der zweiten und der dritten Wörter in dem Ausgangssignal (RXED, TXDD) unter Verwendung der Multiplexerschaltung (230, 430), so dass mindestens eines der dritten Wörter in dem Ausgangssignal (RXED, TXDD) nach den ersten der ersten und der zweiten Wörter und vor dem zweiten der ersten Wörter und einem zweiten der zweiten Wörter in dem zweiten Paket bereitgestellt wird.

9. Verfahren nach Anspruch 7 oder 8, ferner umfassend:
Empfangen der zweiten Wörter, die mit den ersten Wörtern verschachtelt sind, in einem Eingangssignal (RXDD, TXED), das von dem Ausgangssignal (RXED, TXDD) abgeleitet ist, an einer Demultiplexerschaltung (330, 530) in einer Portdeselektierschaltung (112, 114);
Bereitstellen jedes der ersten Wörter an eine erste Portschaltung (301, 501) in der Portdeselektierschaltung (112, 114), um das erste Paket zu regenerieren; und Bereitstellen jedes der zweiten Wörter an eine zweite Portschaltung (302, 502) in der Portdeselektierschaltung (112, 114), um das zweite Paket zu regenerieren.

10. Verfahren nach einem der Ansprüche 7 bis 9, ferner umfassend:
Akkumulieren der ersten Bits, die von der ersten Senderschaltung (201, 401) empfangen werden, in die ersten Wörter unter Verwendung einer ersten Akkumulatorschaltung (211, 411) in der Portauswahlschaltung (111, 113);
Bereitstellen der ersten Wörter an die erste Pufferschaltung (221, 421);
Akkumulieren der zweiten Bits, die von der zweiten Senderschaltung (202, 402) empfangen werden, in die zweiten Wörter unter Verwendung einer zweiten Akkumulatorschaltung (212, 412) in der Portauswahlschaltung (111, 113); und
Bereitstellen der zweiten Wörter an die zweite Pufferschaltung (222, 422).

## Revendications

1. Système de réseau électronique (100) comprenant :
un premier circuit émetteur (201, 401) qui émet des premiers bits ;
un deuxième circuit émetteur (202, 402) qui émet des deuxièmes bits ;
un circuit de sélection de port (111, 113) comprenant un premier circuit tampon (221, 421) qui stocke des premiers mots dans un premier paquet des premiers bits reçus depuis le premier circuit émetteur (201, 401), un deuxième circuit tampon (222, 422) qui stocke des deuxièmes mots dans un deuxième paquet des deuxièmes bits reçus depuis le deuxième circuit émetteur (202, 402), et un circuit multiplexeur (230, 430) qui reçoit les premiers mots depuis le premier circuit tampon (221, 421) et les deuxièmes mots depuis le deuxième circuit tampon (222, 422), le circuit multiplexeur (230, 430) entrelaçant les deuxièmes mots avec les premiers mots dans un premier signal de sortie (RXED, TXDD) de façon à ce qu'un premier des deuxièmes mots du deuxième paquet soit fourni dans le premier signal de sortie (RXED, TXDD) après un premier des premiers mots dans le premier paquet et avant un deuxième des premiers mots dans le premier paquet,
le premier circuit émetteur (201, 401) étant reconfiguré dynamiquement pour faire passer une vitesse de transmission des premiers bits d'un premier débit binaire à un deuxième débit binaire qui est différent du premier débit binaire, le deuxième circuit émetteur (202, 402) étant reconfiguré dynamiquement pour faire passer une vitesse de transmission des deuxièmes bits du premier débit binaire au deuxième débit binaire, le premier circuit tampon (221, 421) stockant les premiers mots à chacun du premier débit binaire et du deuxième débit binaire, le deuxième circuit tampon (222, 422) stockant les deuxièmes mots à chacun du premier débit binaire et du deuxième débit binaire, et le circuit multiplexeur (230, 430) entrelaçant les deuxièmes mots avec les premiers mots à chacun du premier débit binaire et du deuxième débit binaire ; et
un circuit contrôleur de sécurité (105) qui exécute une fonction de sécurité sur le premier signal de sortie (RXED, TXDD) afin de générer un deuxième signal de sortie (RXDD, TXED) indiquant les premiers et les deuxièmes mots ; et
un circuit de désélection de port (112, 114) comprenant des premier et deuxième circuits de port (301, 501, 302, 502) et un circuit démultiplexeur (330, 530) qui reçoit le deuxième signal de sortie (RXED, TXDD), le circuit démultiplexeur (330, 530) fournissant chacun des premiers mots au premier circuit de port (301, 501) et chacun des deuxièmes mots au deuxième circuit de port (302, 502).

2. Système de réseau électronique (100) selon la revendication 1, comprenant en outre :
un troisième circuit émetteur (203, 403) qui émet des troisièmes bits, le circuit de sélection de port (111, 113) comprenant en outre un troisième circuit tampon (223, 423) qui stocke des troisièmes mots dans un troisième paquet des troisièmes bits reçus depuis le troisième circuit émetteur (203, 403), le circuit multiplexeur (230, 430) recevant les troisièmes mots depuis le troisième circuit tampon (223, 423), et le circuit multiplexeur (230, 430) entrelaçant les premiers, les deuxièmes et les troisièmes mots dans le premier signal de sortie (RXED, TXDD) de façon à ce qu'un premier des troisièmes mots dans le troisième paquet soit fourni dans le premier signal de sortie (RXED, TXDD) après les premiers des premiers et des deuxièmes mots et avant le deuxième des premiers mots et un deuxième des deuxièmes mots dans le deuxième paquet.

3. Système de réseau électronique (100) selon la revendication 2, comprenant en outre :
un quatrième circuit émetteur (204, 404) qui émet des quatrièmes bits, le circuit de sélection de port (111, 113) comprenant en outre un quatrième circuit tampon (224, 424) qui stocke des quatrièmes mots dans un quatrième paquet des quatrièmes bits reçus depuis le quatrième circuit émetteur (204, 404), le circuit multiplexeur (230, 430) recevant les quatrièmes mots depuis le quatrième circuit tampon (224, 424), et le circuit multiplexeur (230, 430) entrelaçant les premiers, les deuxièmes, les troisièmes et les quatrièmes mots dans le premier signal de sortie (RXED, TXDD) en réponse à un signal d'horloge (CLK1, CLK3) de façon à ce que l'un des quatrièmes mots soit fourni dans le premier signal de sortie (RXED, TXDD) après les premiers des premiers, des deuxièmes et des troisièmes mots et avant les deuxièmes des premiers et des deuxièmes mots et un deuxième des troisièmes mots dans le troisième paquet.

4. Système de réseau électronique (100) selon la revendication 2,
dans lequel le circuit de désélection de port (112, 114) comprend un quatrième circuit tampon (321, 521), un cinquième circuit tampon (322, 522), un sixième circuit tampon (323, 523) et un circuit démultiplexeur (330, 530) qui reçoit les premiers, les deuxièmes et les troisièmes mots, le circuit démultiplexeur (330, 530) fournissant chacun des premiers mots au quatrième circuit tampon (321, 521) afin de régénérer le premier paquet, chacun des deuxièmes mots au cinquième circuit tampon (322, 522) afin de régénérer le deuxième paquet, et chacun des troisièmes mots au sixième circuit tampon (323, 523) afin de régénérer le troisième paquet.

5. Système de réseau électronique (100) selon la revendication 3,
dans lequel le circuit de désélection de port (112, 114) comprend un cinquième circuit tampon (321, 521), un sixième circuit tampon (322, 522), un septième circuit tampon (323, 523), un huitième circuit tampon (324, 524) et un circuit démultiplexeur (330, 530) qui reçoit les premiers, les deuxièmes, les troisièmes et les quatrièmes mots, le circuit démultiplexeur (330, 530) fournissant chacun des premiers mots au cinquième circuit tampon (321, 521) afin de régénérer le premier paquet, chacun des deuxièmes mots au sixième circuit tampon (322, 522) afin de régénérer le deuxième paquet, chacun des troisièmes mots au septième circuit tampon (323, 523) afin de régénérer le troisième paquet, et chacun des quatrièmes mots au huitième circuit tampon (324, 524) afin de régénérer le quatrième paquet.

6. Système de réseau électronique (100) selon l'une quelconque des revendications 1 à 5, dans lequel le circuit de sélection de port (111, 113) comprend en outre un premier circuit accumulateur (211, 411) qui accumule les premiers bits reçus depuis le premier circuit émetteur (201, 401) pour former les premiers mots et qui fournit les premiers mots au premier circuit tampon (221, 421), et dans lequel le circuit de sélection de port (111, 113) comprend en outre un deuxième circuit accumulateur (212, 412) qui accumule les deuxièmes bits reçus depuis le deuxième circuit émetteur (202, 402) pour former les deuxièmes mots et qui fournit les deuxièmes mots au deuxième circuit tampon (222, 422).

7. Procédé de transmission de données dans un système de réseau électronique (100), le procédé comprenant :
la réception de premiers bits depuis un premier circuit émetteur (201, 401) ;
la réception de deuxièmes bits depuis un deuxième circuit émetteur (202, 402) ;
le stockage de premiers mots des premiers bits provenant d'un premier paquet dans un premier circuit tampon (221, 421) dans un circuit de sélection de port (111, 113) ;
le stockage de deuxièmes mots des deuxièmes bits provenant d'un deuxième paquet dans un deuxième circuit tampon (222, 422) dans le circuit de sélection de port (111, 113) ;
la fourniture des premiers mots provenant du premier circuit tampon (221, 421) et des deuxièmes mots provenant du deuxième circuit tampon (222, 422) à un circuit multiplexeur (230, 430) dans le circuit de sélection de port (111, 113) ;
l'entrelacement des deuxièmes mots avec les premiers mots dans un signal de sortie (RXED, TXDD) au moyen du circuit multiplexeur (230, 430) de façon à ce qu'un premier des deuxièmes mots provenant du deuxième paquet soit fourni dans le signal de sortie (RXED, TXDD) après un premier des premiers mots provenant du premier paquet et avant un deuxième des premiers mots provenant du premier paquet ;
la reconfiguration dynamique du premier circuit émetteur (201, 401) pour faire passer une vitesse de transmission des premiers bits d'un premier débit binaire à un deuxième débit binaire qui est différent du premier débit binaire ;
la reconfiguration dynamique du deuxième circuit émetteur (202, 402) pour faire passer une vitesse de transmission des deuxièmes bits du premier débit binaire au deuxième débit binaire,
le stockage des premiers mots dans le premier circuit tampon (221, 421) comprenant le stockage des premiers mots à chacun du premier débit binaire et du deuxième débit binaire dans le premier circuit tampon (221, 421), et le stockage des deuxièmes mots dans le deuxième circuit tampon (222, 422) comprenant le stockage des deuxièmes mots à chacun du premier débit binaire et du deuxième débit binaire dans le deuxième circuit tampon (222, 422) ; et
l'exécution d'une fonction de sécurité au moyen d'un circuit contrôleur de sécurité (105) sur le signal de sortie (RXED, TXDD) du circuit multiplexeur (230, 430) afin de générer un signal de sortie supplémentaire (RXDD, TXED) indiquant les premiers et les deuxièmes mots, la réception, au niveau d'un circuit démultiplexeur (330, 530), du signal de sortie supplémentaire (RXED, TXDD), le circuit démultiplexeur (330, 530) fournissant chacun des premiers mots à un premier circuit de port (301, 501) et chacun des deuxièmes mots à un deuxième circuit de port (302, 502).

8. Procédé selon la revendication 7, comprenant en outre :
la réception de troisièmes bits depuis un troisième circuit émetteur (203, 403) ;
le stockage de troisièmes mots des troisièmes bits provenant d'un troisième paquet dans un troisième circuit tampon (223, 423) ;
la fourniture des troisièmes mots provenant du troisième circuit tampon (223, 423) au circuit multiplexeur (230, 430) ; et
l'entrelacement des premiers, des deuxièmes et des troisièmes mots dans le signal de sortie (RXED, TXDD) au moyen du circuit multiplexeur (230, 430) de façon à ce qu'au moins l'un des troisièmes mots soit fourni dans le signal de sortie (RXED, TXDD) après les premiers des premiers et des deuxièmes mots et avant le deuxième des premiers mots et un deuxième des deuxièmes mots dans le deuxième paquet.

9. Procédé selon la revendication 7 ou 8, comprenant en outre :
la réception, au niveau d'un circuit démultiplexeur (330, 530) dans un circuit de désélection de port (112, 114), des deuxièmes mots entrelacés avec les premiers mots dans un signal d'entrée (RXDD, TXED) qui est dérivé du signal de sortie (RXED, TXDD) ;
la fourniture de chacun des premiers mots à un premier circuit de port (301, 501) dans le circuit de désélection de port (112, 114) afin de régénérer le premier paquet ; et
la fourniture de chacun des deuxièmes mots à un deuxième circuit de port (302, 502) dans le circuit de désélection de port (112, 114) afin de régénérer le deuxième paquet.

10. Procédé selon l'une quelconque des revendications 7 à 9, comprenant en outre :
l'accumulation des premiers bits reçus depuis le premier circuit émetteur (201, 401) pour former les premiers mots au moyen d'un premier circuit accumulateur (211, 411) dans le circuit de sélection de port (111, 113) ;
la fourniture des premiers mots au premier circuit tampon (221, 421) ;
l'accumulation des deuxièmes bits reçus depuis le deuxième circuit émetteur (202, 402) pour former les deuxièmes mots au moyen d'un deuxième circuit accumulateur (212, 412) dans le circuit de sélection de port (111, 113) ; et
la fourniture des deuxièmes mots au deuxième circuit tampon (222, 422).
